# EUROPEAN PATENT APPLICATION

(11) **EP 4 322 114 A1**
(43) Date of publication of application: **14.02.2024**
(21) Application number: 22190239.8
(22) Date of filing: 12.08.2022
(51) Int. Cl.: G06T 19/00

(54) **PROJECTIVE BISECTOR MIRROR**

(71) Applicant: Technische Universität München, 80333 München (DE)
(72) Inventor: Navab, Nassir, 81247 München (DE); Yu, Kevin, 80807 München (DE)
(74) Representative: Lucke, Andreas

(57) **Abstract**

A computer-implemented method is provided for generating, based on a first digital image associated with a first viewpoint, a virtual mirror image according to a perspective view associated with a second viewpoint. The method comprises determining a bisector plane of the first viewpoint and the second viewpoint. The method further comprises computing the virtual mirror image based on a projection of the first digital image onto the bisector plane.

## Description

### TECHNICAL FIELD

The disclosure relates to a computer-implemented method for providing visual information from digital information to an observer. Specifically, the disclosure relates to augmenting a perspective view in a scene with visual information from a source associated with a different viewpoint.

### BACKGROUND

Cameras are provided in a wide range of environments to support human activities. For example, in medical diagnosis and surgical treatment imaging technologies are widely applied to provide the attending physician with information. In computer-assisted surgical treatment or endoscopy cameras provide the physician with views that would not be easily accessible to the human eye. This is even more true when the imaging uses electromagnetic radiation not perceptible to a human being, such as x-ray, infrared or ultraviolet radiation.

As another example, vehicles such as cars increasingly carry imaging devices, such as cameras, on board to provide the driver with additional views. Hence, obstacles or other vehicles, that are hardly accessible to the field of view of the driver himself, can be detected, e.g. when changing lanes on a highway or during parking, and the safety of the car and the driver is improved. For example, camera views can be provided on a media display next to the driving controls, such that the driver may assess obstacles outside of his field of view, e.g. behind the car.

### OVERVIEW

To make the image information obtained by the various cameras processable to a human being, it needs to be provided in a useful form. Mirror views are intuitively understood as such by humans and therefore advantageous. However, providing a mirror view based on a camera image traditionally requires construction of a three-dimensional virtual scene based on the camera image, e.g. as a point cloud. The mirror image is then calculated based on the three-dimensional virtual scene. This process is computationally demanding and error-prone. In particular, the process step of constructing the three-dimensional scene may lead to artifacts in the calculated mirror image.

In view of the technical problems laid out above, there is a need for an improved computer-implemented method for generating a virtual mirror image. This objective is achieved with a method according to claim 1 and a computer program according to claim 13. Claim 14 provides a computer system for generating the virtual mirror image.

In a first aspect, a computer-implemented method is provided for generating, based on a first digital image associated with a first viewpoint, a virtual mirror image according to a perspective view associated with a second viewpoint. The method comprises determining a bisector plane of the first viewpoint and the second viewpoint. The method comprises computing the virtual mirror image based on a projection of the first digital image onto the bisector plane.

The determining the bisector plane and the projection thereon may thus enable the construction of a virtual mirror image from the (two-dimensional) digital image, without a need for (e.g., reconstructing) three-dimensional information about the content of the digital image or the virtual mirror image. Consequently, it may provide a robust and computationally efficient method for generating the virtual mirror image according to the perspective view associated with the second viewpoint, which can be intuitively understood by a human observer at the second viewpoint.

The virtual mirror image may be considered a projective bisector mirror image, and/or a corresponding virtual mirror may also be considered a projective bisector mirror, respectively, which may project the first digital image according to a mirror plane defined by the bisector plane to determine the projective bisector mirror image.

The projection onto the bisector plane may refer to a projection in the sense of geometrical optics (ray optics), e.g. in terms of a ray diagram or a ray construction, such as for the construction of an image. For example, each individual point (e.g., pixel) in the first digital image may be associated to a respective ray via the geometrical optics. The projection onto the bisector plane may refer to an assignment of the points (e.g., pixels) in the first digital image to corresponding points on the bisector plane, more specifically to the points on the bisector plane where the respective rays intersect the bisector plane. The assignment may concern respective image information, e.g. for a color image, the color of the point in the first digital image may be assigned to the corresponding point on the bisector plane.

When viewed from the second viewpoint, the projection may appear as a mirror image (i. e., a mirror-transformed image), i.e. of the objects reflected in the first digital image. In other words, an image of the projection, as obtained from the second viewpoint, appears as a mirror image of the objects reflected in the first digital image. Correspondingly, the image of the projection as obtained from the second viewpoint (i.e., the mirror-transformed image) may be computed according to some embodiments, and maybe provided (e.g., to a receiving computer component) to provide the virtual mirror image. In alternative embodiments, the projection may be computed and provided (e. g., to the receiving computer system) as the virtual mirror image, such as for computation of the image of the projection from the second viewpoint (i.e., the mirror-transformed image) by the receiving computer system.

The projection may be computed as the virtual mirror image.

Alternatively, or in addition, the method may comprise imaging the projection into the perspective view associated with the second viewpoint to obtain a mirror-transformed image. In corresponding embodiments, the mirror-transformed image may be computed as the virtual mirror image.

The first digital image may be transformed into the mirror-transformed image by transforming the first digital image into the perspective view associated with the second viewpoint as a virtual mirror image with respect to the bisector plane.

In other words, the method may comprise transforming, according to a mirroring about the bisector plane, the first digital image into the mirror-transformed image according to the perspective view associated with the second viewpoint. The method may further comprise generating the virtual mirror image as the mirror-transformed image or as at least a section of the mirror-transformed image.

Accordingly, the first digital image may be transformed into a perspective accurate virtual mirror image seen from the second viewpoint for a virtual mirror on the bisector plane.

In other words, the projection of the first digital image on the bisector plane may correspond to a virtual mirror in the bisector plane as or when seen from the second viewpoint.

The virtual mirror image may correspond to a distorted image of the first digital image, wherein the distortion is such that the virtual mirror image appears as a perspective-accurate mirror image of the first digital image for a mirror located in the bisector plane and viewed from the second viewpoint.

To construct the bisector plane, the method may use information about the relative position of the first viewpoint and the second viewpoint, or about their absolute positions.

An imaging device may be located at the first viewpoint, and an observer may be located at the second viewpoint.

The observer may be a human observer, and the virtual mirror image, in particular the mirror-transformed image, may be provided to the human observer on a display, such as an LED screen or a head-up display. The display may be arranged in the perspective view of the observer.

Alternatively, the observer at the second viewpoint may be an electronic device, such as a camera, an x-ray or infrared imaging device, or a virtual-reality device combining an imaging device and a display, such as virtual-reality glasses. In corresponding embodiments, the virtual mirror image may be provided to the electronic device digitally, for example for merging it with an image from the electronic device to produce a combined, i.e. augmented reality or virtual reality, image in a computer system of the electronic device. Alternatively, the virtual mirror image and the image from the electronic device may be sent to an external computer system for the merging. The combined image may be displayed on the virtual-reality device.

The first and/or the second viewpoint may be fixed, for example if the imaging device is a rear-view camera of a car and the observer is a human driver in the driver's seat of the car. In corresponding embodiments, the relative position of the first viewpoint and the second viewpoint may be determined by and during the installation of the camera.

Alternatively, at least one of the first viewpoint and the second viewpoint may move, for example if the imaging device is mounted on a robot for a surgery, and the observer is a surgeon moving around the patient during the surgery; or if the imaging device is the front-facing camera of a mobile phone and the observer is the user of the camera. In corresponding embodiments, the relative position of the second viewpoint, or of the observer, respectively, with respect to the first viewpoint may be determined from the digital image, e.g. by eye tracking. Additionally or alternatively, the relative position of the first viewpoint, or the imaging device, respectively, and the second viewpoint, or the observer, respectively, may be tracked using an additional sensor. For example, the relative position maybe determined from images acquired by an external camera, or from images acquired by the imaging device and/or the observer may be tracked using GPS, WiFi, or Bluetooth localization or an inertial measurement unit (IMU).

In the context of this disclosure, an image, in particular a digital image, may be two-dimensional or may comprise two-dimensional image information, for example as opposed to a three-dimensional dataset such as a three-dimensional virtual scene or a (three-dimensional) point cloud.

The perspective view associated with the second viewpoint may refer to a perspective view from the second viewpoint.

The perspective view associated with the second viewpoint may refer to an observer view, e.g. to a view (in particular, a perspective view) of an observer (such as a real or virtual observer) from the second viewpoint. The observer may be a human or an electronic device such as an imaging device.

The first digital image associated with the first viewpoint may refer to a first digital image as seen from the first viewpoint.

A first ray may be associated with a reference point of the first digital image. In other words, the reference point of the first digital image may define the first ray.

Computing the virtual mirror image may comprise computing a first intersection point between a first ray and the bisector plane, wherein the first ray is associated with a reference point of the first digital image.

Computing the virtual mirror image may comprise projecting the first intersection point into the perspective view associated with the second viewpoint, such as to obtain a projected reference point.

Projecting a finite set of reference points, for example corners of a reference region of the first digital image, may provide a fast and computationally efficient transformation method. After the projection, the first digital image, or the reference region thereof, respectively, may be projected into the virtual mirror image making use of the knowledge of the reference points and the corresponding projected reference points without a need for three-dimensional information, for example using homography.

In other words, the region of the first digital image defined by the reference points as its corners may be stretched or distorted into a region defined by the projected reference points, without further knowledge about the three-dimensional scene.

For example, a reference point of the first digital image maybe used to determine the first ray based on a camera model of a first imaging device for obtaining the first digital image. For example, the first ray may be constructed based on a camera matrix for the first imaging device, which may map image coordinates of the first digital image to real-world coordinates, e. g. to a two-dimensional coordinate system (such as polar coordinates, e.g., polar and azimuthal angular coordinates, e.g. according to a pinhole camera model) with its origin at the first viewpoint, or at the first imaging device, respectively. Alternatively, the first ray may be constructed based on a three-dimensional reconstruction of a scene of the first digital image, for example with reference to three-dimensional coordinates of the scene, or based on a camera matrix or a camera coordinate system derived therefrom.

A projection geometry of the camera may be used to determine intersection points on the bisector plane corresponding to reference points of the first digital image.

The reference point may be associated with a (e.g., shape of a) reference region of the first digital image or define the (e.g., shape of the) reference region in the first digital image. For example, the reference point may refer to a corner of the reference region; or more specifically, four reference points may refer to four corners of the reference region. Alternatively, in embodiments with a plurality of reference regions, reference points may refer to centers of the reference regions.

According to embodiments, the reference region may correspond to the (i.e., entire) first digital image.

Alternatively, or in addition, the reference point may correspond to a pixel of the first digital image.

The method may comprise determining a projection region of the bisector plane.

The projection region may refer to a region on the bisector plane which appears as a mirror showing the first digital image to an observer located at the second viewpoint.

The projection region may be associated with or (partially) defined by the first intersection point. For example, the first intersection point may refer to a corner of the projection region; or more specifically, four first intersection points may refer to four corners of the projection region. Alternatively, the first intersection point may refer to a center of the projection region.

The method may further comprise determining a virtual mirror region of the perspective view associated with the second viewpoint.

The virtual mirror region may refer to a region in the perspective view of an observer located at the second viewpoint wherein the virtual mirror image is seen.

In some embodiments, the virtual mirror region may be defined with respect to a coordinate system related to the second viewpoint, such as a polar coordinate system. In other words, the virtual mirror region may correspond to a section of a field of view of an observer at the second viewpoint.

In some embodiments, the virtual mirror region may be a region of a second digital image associated with the second viewpoint, i.e., a virtual mirror region of the second digital image. The second digital image may be based on an image from a second digital device located at the second viewpoint, or may be an image from the second digital device located at the second viewpoint.

The virtual mirror region may be associated with or defined by the first intersection point and/or by the second intersection point, or by a third ray.

The first intersection point and/or the second intersection point, or the third ray may limit the virtual mirror region. For example, the first intersection point and/or the second intersection point, or the third ray may define a corner of the virtual mirror region; or more specifically, four first intersection points and/or four second intersection points, or four third rays may refer to four corners of the virtual mirror region. Alternatively, the first intersection point and/or the second intersection point, or the third ray may refer to a center of the virtual mirror region.

The computing the first intersection point may comprise referencing a direction of the first ray to a first field of view or to a first viewing direction associated with the first digital image.

The projecting the first intersection point into the perspective view associated with the second viewpoint may comprise referencing the first intersection point to a second field of view or to a second viewing direction associated with the perspective view associated with the second viewpoint.

The first field of view (first frustrum) of the first imaging device may provide an easily available reference frame for the referencing of the direction of the first ray in real-world coordinates to the image coordinates of the first digital image and vice versa. For example, if the first digital image is from an imaging device, the first field of view may be determined from technical data and sensor data of the imaging device. In particular, the vertical and horizontal opening angles of the field of view may be provided with the imaging device, and a principal ray, or viewing direction, respectively, may be determined from sensor data, e.g., from an IMU sensor of the imaging device. Alternatively, the first field of view may be determined directly from the first digital image, for example using reference objects therein, e.g. reference objects with a predefined distance.

The first ray may be passing through the first viewpoint.

The first viewpoint may be associated with (or may correspond to) a position of a first imaging device (e.g., for obtaining the first digital image).

The second viewpoint may be associated with (or may correspond to) a position of a second imaging device (e.g., for obtaining the second digital image).

The method may comprise determining a projection geometry between the reference point of the first digital image and a direction of the first ray.

In particular, the direction of the first ray may refer to the direction (for example, the angle, e.g. with reference to the first field of view or the first viewing direction) of the first ray through the first viewpoint.

For example (e.g., in embodiments with a first imaging device for obtaining the first digital image), the direction of the first ray maybe a real-world direction of the first ray.

The first field of view or the first viewing direction may be associated with the first digital image and/or may be associated with the first imaging device.

The second field of view or the second viewing direction may be associated with the second digital image and/or may be associated with the second imaging device.

In particular, the first ray may pass through the first viewpoint and the reference point of the first digital image, or the computer-implemented method may comprise constructing the first ray through the first viewpoint and the reference point.

The method may further comprise: Projecting, according to a mirroring about the bisector plane, a shape of a reference region of the first digital image onto the perspective view associated with the second viewpoint to obtain the virtual mirror region; and transforming the reference region of the first digital image to the virtual mirror region.

The reference region may be associated with the reference point.

Alternatively, or in addition, the (e.g., shape of the) reference region may correspond to the (e.g., shape of the) first digital image, i.e. to the entire first digital image.

The virtual mirror region may be associated with or defined by the projected reference point.

The projecting the shape of the reference region onto the perspective view may comprise projecting the shape of the reference region into the bisector plane to obtain a projection region. The projecting the shape of the reference region onto the perspective view may further comprise projecting the projection region into the perspective view associated with the second viewpoint to obtain the virtual mirror region.

The reference point or the (e.g., shape of the) reference region may define a coordinate system in or with reference to the first digital image.

The first intersection point or the projection region may define a coordinate system in or with reference to the bisector plane.

The projected reference point or the virtual mirror region may define a coordinate system in or with reference to the perspective view associated with the second viewpoint.

In other words, the method may comprise projecting the reference points associated with the first digital image onto the bisector plane to determine corresponding coordinates on the bisector plane, and determining image coordinates for the virtual mirror image in the perspective view (e.g., of an observer) at the second viewpoint, such as to determine a virtual mirror region of the virtual mirror image in the perspective view seen from the second viewpoint. The skilled person will appreciate that the steps of projecting the reference points of the first digital image onto the bisector plane and determining the image coordinates for the virtual mirror image may be mathematically combined into a single operation, such that the first intersection points or the projection region need not be held in memory of a processing system implementing the method. Rather, the first image (or the reference point(s) related thereto) may be subjected to a single transformation to determine respective image coordinates in the perspective view from the second viewpoint.

The first (or second) viewpoint may correspond to a position of a first (or second) imaging device, e.g. of a first (or second) imaging device for obtaining the first (or second) digital image.

The first (or second) digital image may be based on an image from the first (or second) imaging device.

The first (or second) field of view may correspond to a field of view of the first (or second) imaging device.

The method may be implemented as part of providing an augmented reality and/or virtual reality view to a user associated with the second viewpoint. A display adapted to display (in particular to an observer located at the second viewpoint) the virtual mirror image may be provided. The display may refer to a computer screen, a virtual reality display such as virtual reality glasses, or a head-up display, e.g. using an optical projector such as a LED projector.

The display may be aligned with the second field of view. In other words, the method may comprise keeping a display aligned with the second field of view. The display may be adapted to display the combined image. The method may further comprise keeping an additional display aligned with the other field of view.

The method may comprise determining the second viewpoint based on sensor data. For example, the second (or first) viewpoint may be determined as a position of a second (or first) imaging device. Alternatively, or in addition, the second (or first) viewpoint or a relative position of the first viewpoint and the second viewpoint may be determined from the first digital image and/or the second digital image, e.g. according to objects found in both of them.

The method may comprise determining the position of the first imaging device, the position of the second imaging device and/or the midpoint as an absolute position, e.g. using GPS, inertial measurement unit(s) in the imaging device(s), WiFi, or Bluetooth beacons.

Alternatively, or in addition, the method may comprise determining a relative position of the first imaging device and the second imaging device, e.g. using sensors and corresponding receivers comprised in or associated with the first and second imaging device such as inertial measurement unit(s), WiFi, or Bluetooth senders and/or receiver(s) in the imaging device(s).

The determining the position of the first imaging device and/or of the second imaging device and/or of the midpoint may use any combination of the methods described above, e.g. redundantly, in particular to improve accuracy.

The method may further comprise determining the first field of view and/or the first viewing direction, e.g. as the field of view of the first imaging device or from the first digital image, e.g. by image analysis of the first digital image or of at least one object found therein.

The method may further comprise determining the second field of view and/or the second viewing direction, e.g. as the field of view of the second imaging device or from the second digital image, e.g. by image analysis of the second digital image or of at least one object fond therein.

The method may further comprise merging the virtual mirror image and at least a portion of a second digital image to generate a combined image, wherein the second digital image is associated with the second viewpoint.

The merging may provide an augmented reality. For example, the combined (i.e., augmented reality) image may be provided to a user at the second viewpoint. The user associated with the second viewpoint hence receives the second digital image from the perspective of the second viewpoint, augmented by a virtual mirror image of the first digital image. The mirror representation is intuitive to a human, and the augmentation may, for example, improve the safety of an observer conducting a vehicle or support an observer in a task such as conducting a surgery.

The second digital image associated with the second viewpoint may refer to a second digital image as seen from the second viewpoint.

The first digital image may be based on an image from a first imaging device. The first viewpoint may correspond to a position of the first imaging device.

The second digital image may be based on an image from a second imaging device. The second viewpoint may correspond to a position of the second imaging device.

The image from the first imaging device and the image from the second imaging device may be recorded at the same time, e.g. within 2 seconds or within 1 second or within 0.5 s or within 0.1 s.

Corresponding embodiments may provide a live image of the first imaging device in the virtual mirror.

The first viewpoint may correspond to a position of the first imaging device while having captured the image from the first imaging device.

The first imaging device and/or the second imaging device may be a camera, such as a camera operating in the visible or infrared spectral range, or an x-ray imaging device. According to some embodiments, one of the imaging devices is a camera, and the other is an x-ray imaging device.

The method may comprise keeping a position of the first imaging device or of the second imaging device fixed, or keeping a relative position of the first imaging device and the second imaging device fixed.

The method may comprise, using the first imaging device, capturing (i.e., as the image from the first imaging device) the first digital image. In such embodiments, the first viewpoint may correspond to the position of the first imaging device while capturing the first digital image. The first field of view may correspond to the field of view of the first imaging device while capturing the first digital image.

The method may comprise, using the second imaging device, capturing (i.e., as the image from the second imaging device) the second digital image. In such embodiments, the second viewpoint may correspond to the position of the second imaging device while capturing the second digital image. The second field of view may correspond to the field of view of the second imaging device while capturing the second digital image.

The capturing the first digital image and the capturing the second digital image may be performed at the same time, e.g. within 2 seconds or within 1 second, within 0.5 s or within 0.1 s.

The method may comprise adding a computer-animated object to the image from the first (and/or second) imaging device, such as to obtain the first (and/or second) digital image.

In other words, the first (and/or second) digital image may be based on the computer-animated object in addition to being based on the image from the first (and/or second) imaging device.

The computer-animated object maybe three-dimensional. The adding the computer-animated object to the image from the first (and/or second) imaging device may comprise adding the three-dimensional computer-animated object according to the first (and/or second) viewpoint and the first (and/or second) field of view, i.e. such that the added three-dimensional computer-animated object in the image from the first (and/or second) imaging device correctly reflects the perspective from the viewpoint of the respective image onto the three-dimensional computer-animated object.

The method may further comprise re-determining, upon a change of the first viewpoint and/or the second viewpoint to a new position, the bisector plane of the first viewpoint and the second viewpoint according to the new position(s).

In particular, the bisector plane may be re-determined in an iterative manner.

The method may comprise re-performing any or all the process steps described above with respect to the first viewpoint, the second viewpoint, or the bisector plane, taking into account the new position(s) of the first viewpoint and/or of the second viewpoint, in particular in an iterative manner.

Accordingly, the user observing from the second viewpoint can continuously be presented with the view taken from the first viewpoint, which is generally different from the second viewpoint, in a way that is perspective accurate for the user, such as to support the user during tasks, e.g. surgical tasks, maintenance task, assembly tasks, or a combination thereof.

The method may further comprise, after determining the bisector plane of the first viewpoint and the second viewpoint, storing the bisector plane to obtain a fixed bisector plane and/or storing the second viewpoint to obtain a fixed reference second viewpoint. The method may further comprise, upon a change of the second viewpoint to a new position thereof: Computing a subsequent virtual mirror image based on a projection of a subsequent first digital image onto the fixed bisector plane, such that the subsequent virtual mirror image is a mirror image of the subsequent first digital image according to a perspective view associated with the fixed reference second viewpoint.

Setting the bisector plane of the second viewpoint to a fixed, i.e., temporally constant, position based on a viewpoint at a specific moment in time, may avoid undesirable or unintentional changes in the corresponding position and hence improve the safety of a task performed with the help of the virtual mirror image. For example, a surgeon performing a surgery may first move to a (second) viewpoint where the virtual mirror image gives an ideal view of an organ to be treated. The method described above, with the iterative re-determining of the bisector plane, may give the surgeon a tool for intuitively doing so. After having identified the corresponding (second) viewpoint, the surgeon may fix the bisector plane to ensure the ideal view of the organ, for example until another view is desired and he changes back to the method with the iterative re-determining of the bisector plane. As another example, for a virtual mirror associated with a rear-facing camera of a vehicle such as a car, fixing the position of the bisector plane may ensure a view of a section next to the car which would otherwise pose a blind area, even if the driver is forced to perform an undesirable movement such as to pick up an item.

The method may comprise storing a position (e.g., relative to the fixed bisector plane) of the first viewpoint used in determining the fixed bisector plane to obtain a fixed reference first viewpoint.

The determining the bisector plane may comprise determining a midpoint between the first viewpoint and the second viewpoint.

The determining the bisector plane may comprise determining a first direction from the second viewpoint to the first viewpoint.

The determining the bisector plane may comprise determining the bisector plane perpendicular to the first direction and through the midpoint.

In particular, the midpoint maybe determined as a midpoint between a position of the second imaging device or of an observer associated with the second viewpoint and a position of the first imaging device.

In particular, the first direction may be determined from the second imaging device or from an observer associated with the second viewpoint to the first imaging device.

The method may comprise defining a predefined projection section within the perspective view associated with the second viewpoint or a predefined mirror section within a second digital image associated with the second viewpoint.

The method may comprise transforming, according to a mirroring about the bisector plane, the predefined projection section or the predefined mirror section into the first digital image to define a region of interest.

The reference region of the first digital image may be defined by the region of interest.

Predefining the projection section may ensure that the virtual mirror image always takes up the same size and region (namely, the projection section) in the perspective view from the second viewpoint or in the second digital image. Otherwise, the size and region that the virtual mirror image would take up in the perspective view from the second viewpoint or in the second digital image would change as the first viewpoint of the second viewpoint moves. In other words, as an observer at the second viewpoint moves, the observer would see the virtual mirror grow smaller or larger. For example, the virtual mirror might grow to a size that it might obscure other parts of the view of the observer, which might become a safety hazard in a surgical environment or in a vehicle.

For example, the method may comprise defining the at least one (in particular, the at least three, the at least four, or the exactly four) reference point(s) according to the region of interest.

In some embodiments, the transforming the predefined projection section into the first digital image may correspondingly comprise any or all process steps described above in the context of the projecting the (shape of the) reference region of the first digital image into the perspective view associated with the second viewpoint, and vice versa. This may be considered as a consequence of the first digital image and the second digital image (or the first imaging device and the second imaging device, respectively) being exchangeable in some embodiments. Correspondingly, second reference points or second rays may be applied with respect to a predefined projection region (or the second digital image, or the second imaging device, respectively), characterized by one or all the features described above in the context of the reference region (or the first digital image, or the first imaging device, respectively).

For example, projecting the predefined projection region onto the plane of the first digital image may comprise projecting the predefined projection region onto the bisector plane to generate a second projection region; and projecting the second projection region onto an image plane associated with the first digital image, e.g. according to a pinhole camera model of the first imaging device, to obtain the region of interest.

A second reference point may be associated with (e.g., a shape of) the predefined projection region or define the (e.g., shape of the) predefined projection region. For example, the second reference point may refer to a corner of the predefined projection region; or more specifically, four second reference points may refer to four corners of the predefined projection region. Alternatively, the second reference point may refer to a center of the predefined projection region.

Alternatively, or in addition, the second reference point may correspond to a pixel of the second digital image.

The projecting the predefined projection region onto the first digital image, in particular the projecting the predefined projection region onto the bisector plane, may comprise projecting the second reference points onto the bisector plane.

The projecting the predefined projection region onto the first digital image, in particular the projecting the predefined projection region onto the bisector plane, may comprise constructing second rays.

The second rays may comprise the second viewpoint and/or the position of the second imaging device.

The second rays may correspond to (in particular may be located within, in particular may be located at a boundary of) the predefined projection region. Alternatively, or in addition, the second rays may comprise the second reference points.

The projecting the predefined projection region onto the first digital image to define the region of interest may comprise determining third intersection points between the second rays and the bisector plane.

The projecting the predefined projection region onto the first digital image to define the region of interest may comprise projecting the third intersection points onto the first digital image to determine fourth intersection points. The method may further comprise identifying an area defined by the fourth intersection points as the region of interest.

The method may further comprise determining whether at least a portion of the region of interest is located in the first digital image and/or within the first field of view.

The determining whether at least a portion of the region of interest is located in the first digital image and/or within the first field of view may comprise projecting the third intersection points onto the first digital image to determine fourth intersection points; and determining whether at least one of the fourth intersection points is within the first field of view or determining whether all the fourth intersection points are within the first field of view.

According to some embodiments, prior to the process step of merging the at least one portion of the second digital image and the virtual mirror image, the method comprises determining a section of the virtual mirror image overlapping with the second digital image. In corresponding embodiments, the virtual mirror image overlapping with the at least one portion of the second digital image (i.e., the determined section) is merged with the at least one portion of the second digital image to generate the combined image.

In other words, only those sections of the virtual mirror image (i.e., overlapping with the second digital image) may be taken account for the combined image.

In other words, the combined image may not be larger than the second digital image.

The method may further comprise determining a bisector section as a section of the bisector plane located in a first field of view associated with the first digital image and a second field of view, wherein the second field of view is associated with the perspective view associated with the second viewpoint. The reference region may be defined by the bisector section.

In other words, the reference region may correspond to or be defined as a projection of the bisector section onto the first digital image.

In yet other words, the bisector section may correspond to or be a projection of the reference region onto the bisector plane.

The determining the bisector section may comprise or be: Determining the projection region, wherein the projection region corresponds to an intersection of the first field of view and the bisector plane; determining whether at least a portion of the projection region is located within the second field of view associated with the second digital image; and, if this is the case: Identify the at least one portion of the projection region located within the second field of view as the bisector section.

For example, the determining whether at least a portion of the projection region is located within the second field of view may comprise determining whether at least one of the first intersection points is within the second field of view or determining whether all the first intersection points are within the second field of view.

The perspective view associated with the second viewpoint may be associated with a three-dimensional virtual scene; and the method may further comprise inserting the projection or the virtual mirror image into the three-dimensional virtual scene.

For example, a virtual reality display such as virtual-reality glasses maybe associated with the second viewpoint. The virtual mirror image may augment and enhance the virtual reality of the observer with the first digital image. The user may be located at the second viewpoint and wearing the virtual reality display, or the user may be located remotely and be provided with the augmented three-dimensional virtual scene on the virtual reality display at his location, e.g. for a telesurgery.

Depth information associated with the three-dimensional virtual scene may be used to determine occlusion of parts of the virtual mirror image/mirror-transformed first image in the perspective view from the second viewpoint. For example, the method may comprise determining objects in the three-dimensional scene image by the second digital image, which are closer to the second viewpoint than the bisector plane and/or a projection region of the bisector plane, such as to determine occluded portions of the virtual image occluded by the objects in the three-dimensional scene. The occluded portions maybe removed from the virtual mirror image, such as to improve a perspective accuracy of the virtual mirror image seen from the second viewpoint.

The perspective view associated with the second viewpoint (or the second digital image) may be derived from the three-dimensional virtual scene, for example according to the second viewpoint. In other words, the method may comprise deriving the second viewpoint (or the second digital image) from the three-dimensional virtual scene.

The method may further comprise rotating and/or scaling the virtual mirror image and/or the three-dimensional virtual scene.

Embodiments with three-dimensional virtual scene may allow for manipulating and optimizing the (first or second) digital image, e.g. by a rotation or a scaling. However, these possibilities may come at the cost of an enhanced computational effort.

The rotating and/or scaling the three-dimensional virtual scene may be performed prior to or preferably after the inserting the virtual mirror image into the three-dimensional virtual scene.

The rotating and/or scaling the virtual mirror image may be performed after the inserting the virtual mirror image into the three-dimensional virtual scene, e.g. together with the rotating and/or scaling the three-dimensional virtual scene.

In particular, the three-dimensional virtual scene may be rotated according to a changed position of the second viewpoint from an original position of the second viewpoint, such that an orientation of the rotated three-dimensional virtual scene relative to the changed position of the second viewpoint is the same as an orientation of the three-dimensional virtual scene relative to the original position of the second viewpoint.

In particular, the three-dimensional virtual scene may be scaled according to a changed position of the second viewpoint from an original position of the second viewpoint, such that a size of the scaled three-dimensional virtual scene in the perspective view associated with the second viewpoint according to its changed position is the same as a size of the three-dimensional virtual scene in the perspective view associated with the second viewpoint according to its original position.

According embodiments may provide an observer with a constant viewing direction or a constant size of the virtual mirror image. This may be particularly useful, if the observer has an interest in a specific section of the first image or of the scene, for example in a (tele-)surgery wherein the surgeon is to perform surgery on a specific organ defining the section of interest.

In some embodiments with the fixed bisector plane or the fixed reference second viewpoint, the three-dimensional virtual scene is rotated or scaled (e.g., upon a change of the second viewpoint to a new position thereof) according to the new position of the second viewpoint and according to the fixed bisector plane or the fixed reference second viewpoint.

Alternatively, or in addition, the method may comprise scaling the second digital image, in particular scaling the second digital image according to the fixed bisector plane or the fixed reference second viewpoint and according to the new position of the second viewpoint, such as to provide the scaled second image for use as the second digital image in subsequent process step(s).

The method may further comprise spatially translating the three-dimensional virtual scene, in particular in embodiments with the rotating and/or the scaling of the three-dimensional virtual scene, such as before the rotating and/or the scaling of the three-dimensional virtual scene. The method may further comprise spatially translating the rotated and/or scaled three-dimensional virtual scene back, i.e. to a position of the three-dimensional virtual scene.

The three-dimensional virtual scene may be based on the image from the first imaging device, or the method may comprise constructing the three-dimensional virtual scene based on the image from the first imaging device.

The method may further comprise: Capturing, using the first imaging device, the image from the first imaging device; and constructing, based on the image from the first imaging device, the three-dimensional virtual scene.

Alternatively, or in addition, at least one or multiple images from one or multiple additional imaging device(s) may be used in constructing the three-dimensional virtual scene.

An additional first digital image may be associated with an additional first viewpoint. An additional perspective view may be associated with an additional second viewpoint. The method may further comprise determining an additional bisector plane of the first viewpoint and the additional second viewpoint; and computing, based on an additional projection of the additional first digital image on the additional bisector plane, an additional virtual mirror image according to the additional perspective view.

The method may comprise one or all the steps described above in the context of the second viewpoint and the perspective view associated therewith with respect to the additional second viewpoint and the additional perspective view associated therewith. In corresponding embodiments, the method may further comprise one or all the steps described above in the context of the second digital image and the second imaging device with respect to an additional second digital image and an additional second imaging device.

The method may comprise performing the process steps described in the context of the additional second digital image, the additional second viewpoint, and the additional perspective view with respect to a plurality of additional second digital images, a plurality of additional second viewpoints, and a plurality of additional perspective views. An additional second viewpoint and an additional second field of view may be associated with each of the additional second digital images.

According to a second aspect, a computer program may be adapted to instruct a computer system to execute the method according to the first aspect.

For example, a non-transitory machine-readable medium may comprise machine-readable instructions, which, when executed by a processing system, implement the method according to the first aspect.

According to a third aspect, a computer system for generating, based on a first digital image associated with a first viewpoint, a virtual mirror image according to a perspective view associated with a second viewpoint, comprises at least one processor and at least one memory. The computer system is adapted to receive the first digital image; to receive the second viewpoint; to determine a bisector plane of the first viewpoint and the second viewpoint; and to compute the virtual mirror image based on a projection (116) of the first digital image on the bisector plane.

The computer system may further comprise a display adapted to display the virtual mirror image, e.g., as described above in the context of the method. In particular, the display may be aligned with the perspective view associated with the second viewpoint. The display may be adapted to display the virtual mirror image according to the perspective view associated with the second viewpoint.

An additional display may be aligned with the first digital image. The additional display may exhibit, with respect to the first viewpoint, one or all the features of the display described above with respect to the second viewpoint.

An imaging system comprises the computer system, and further comprises a first imaging device adapted to acquire the first digital image and to send it to the computer system, wherein the first imaging device is a camera or an x-ray imaging device.

The imaging system may further comprise a second imaging device adapted to acquire the second digital image and to send it to the computer system.

The second imaging device may be a camera or an x-ray imaging device.

In some embodiments, one of the first imaging device and the second imaging device is a camera, and the other of the first imaging device and the second imaging device is an x-ray imaging device.

According to some embodiments, a position of the first imaging device or the second imaging device is fixed or a relative position of the first imaging device and the second imaging device is fixed.

According to a fourth aspect, the invention may relate to a vision assistance system for a vehicle comprising a camera, a display, and a processing system, wherein the processing system is configured to implement the method according to the first aspect, and wherein the virtual mirror image is displayed to a driver of the vehicle at the second viewpoint.

### BRIEF DESCRIPTION OF THE FIGURES

The techniques of the present disclosure and the advantages associated therewith will be best apparent from a description of exemplary embodiments in accordance with the accompanying drawings, in which:
- Fig. 1: illustrates the method according to a first embodiment;
- Fig. 2: illustrates the method according to another embodiment;
- Fig. 3: illustrates a process step of determining a bisector plane;
- Fig. 4: further illustrates the process step of determining the bisector plane;
- Fig. 5: illustrates the method according to another embodiment;
- Fig. 6: illustrates the method according to another embodiment;
- Fig. 7a: illustrates a modification of the method;
- Fig. 7b: further illustrates the modification of the method;
- Fig. 8: illustrates the method according to another embodiment;
- Fig. 9a: illustrates the method according to another embodiment;
- Fig. 9b: illustrates the method according to another embodiment;
- Fig. 10a: illustrates a conventional rear-view mirror of a car;
- Fig. 10b: illustrates the method according to another embodiment;
- Fig. 11a: illustrates the method according to another embodiment;
- Fig. 11b: further illustrates the method according to the embodiment of Fig. 11a;
- Fig. 12a: illustrates the method according to another embodiment;
- Fig. 12b: further illustrates the method according to the embodiment of Fig. 12a;
- Fig. 13a: illustrates an operation room with acquisition cameras;
- Fig. 13b: illustrates the method according to another embodiment; and
- Fig. 14: illustrates the method according to another embodiment.

### DETAILED DESCRIPTION OF EMBODIMENTS

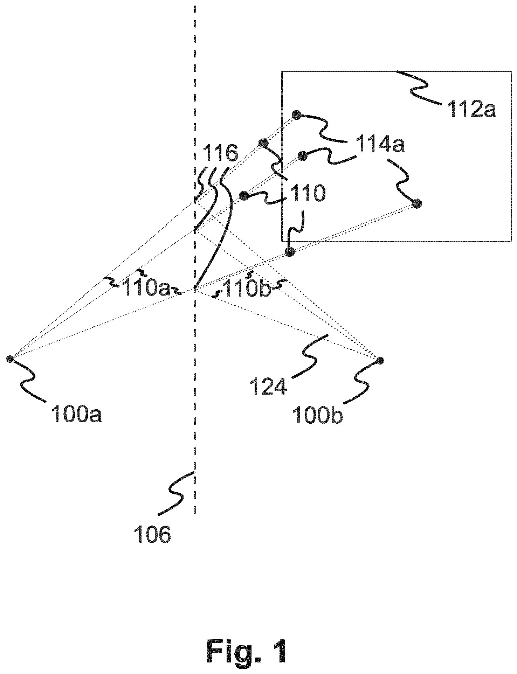

Fig. 1 is a schematic illustration of a method for generating a virtual mirror image based on a first digital image 112a according to an embodiment.

To generate a mirror image for an observer at a second viewpoint 100b, a computer system receives positions of the first and second viewpoints 100a, 100b and determines their relative position in three-dimensional space. Alternatively, the computer system is provided with the information about the relative position of the viewpoints 100a, 100b.

The computer system then calculates the bisector plane 106 between the viewpoints 100a, 100b.

The bisector plane 106 comprises any point with an identical distance to the first viewpoint 100a and the second viewpoint 100b. In other words, the bisector plane is constructed such that mirroring the situation of Fig. 1 about the bisector plane 106 would bring the first viewpoint 100a to the second viewpoint 100b and vice versa.

The computer system then computes the projection 116 of the first digital image 112a onto the bisector plane 106. For this purpose, intersections 116 between rays 110a and the bisector plane 106 are calculated. Altogether, the intersections 116 form the projection 116 of the image 112a onto the bisector plane 106.

In some embodiments, the projection 116 is referred to as the virtual mirror image (or a projective bisector mirror image), as, when observed from the second viewpoint 100b, it represents a perspective accurate mirror image of the scene and the objects 110 therein for a virtual mirror (or a projective bisector mirror) located in the bisector plane 106 and observed from the second viewpoint 100b. In corresponding embodiments, the virtual mirror image is identical to the computed projection 116.

In alternative embodiments, the image of the projection 116 onto the bisector plane 106 as observed from the second viewpoint 100b (i.e., the mirror-transformed image) is referred to as the virtual mirror image (or a projective bisector mirror image). Noteworthy, when the projection 116 has been computed, its image as seen from the second viewpoint 100b can be computed using known techniques and for practically arbitrary imaging devices (digital, analog, virtual, simulated) for obtaining the mirror-transformed image, i.e. the image of the projection 116 from the second viewpoint 100b. In some embodiments, the image of the projection 116 as seen from the second viewpoint 100b is computed without explicitly computing the projection 116.

The fact that the projection 116 represents a perspective accurate mirror image of the scene and the objects 110 therein is an immediate result of the construction of the bisector plane 106. Consequently, rays 110b from the projection 116 to the second viewpoint 100b are identical to rays that an observer at the second viewpoint 100b would receive if the objects 110 were placed mirror-symmetrically to the bisector plane 106 on the left-hand side of the bisector plane 106. In other words, an observer at the second viewpoint 100b sees in the rays 100b, or in the projection 116, respectively, a mirror image of the objects 110.

In the context of this disclosure, the term virtual refers to a digital object, for example, to a digital representation such as a digital image. The virtual mirror image is such a digital object. The virtual mirror image may be presented to an observer at the second viewpoint 100b, e.g. as a real-world image on a screen or a head-up display, or it may be provided in digital format, for example for being merged with a second digital image recorded from the second viewpoint 100b.

Details of the concepts underlying the technique may be understood from the following considerations:
In general, the (first) digital image 112a reflects a two-dimensional projection of objects 110 onto an image plane of the first digital image 112a at positions 114a, e.g. according to a camera model from geometrical optics (ray optics), such as a pinhole camera model (i.e., with a pinhole as the imaging optics) or a camera model wherein imaging optics of the camera (such as a lens system) are described by a focal length or by cardinal points. In corresponding camera models, the image plane reflects a position where a sensor is placed to record the image. In other words, the objects 110 are represented within the two-dimensional first digital image 112a at the positions 114a. For example, in a color image, the color of a pixel at the image positions 114a represents the color of the objects 110.

The projection is performed according to the (first) viewpoint 100a, i.e., the positions 114a of the objects 110 within the image 112a depend on the viewpoint 100a. More precisely, the positions 114a correspond to an intersection of the rays 110a with the image plane of the first digital image 112a, wherein the rays 110a run through the objects 110 and the first viewpoint 100a.

Hence, if the direction of the rays 110a through the first viewpoint 100a and the objects 110 are known, the positions 114a of the objects 110 in the first digital image 112a can be calculated.

Vice versa, if the positions 114a of the objects 110 in the first digital image 112a and the first viewpoint 100a are known, the direction of the rays 110a can be calculated.

The method is based on this perception. With the knowledge of the position of the first viewpoint 100a and of the image positions 114a, the directions of corresponding rays 110a are calculated, or their intersections 116 with the bisector plane 106 are calculated, respectively.

It is to be noted that the various objects 110 of Fig. 1 are located at different distances from the first viewpoint 100a along the rays 110a. This three-dimensional information is not reflected in the image positions 114a. Conventional methods aim at reconstructing the three-dimensional information about the objects 110 from the digital image. In contrast, the described method works with the two-dimensional image positions 114a, and the virtual mirror image is generated without knowledge of the three-dimensional scene depicted in the first digital image 112a. The only three-dimensional information used may be the one about the positions of the viewpoints 100a, 100b. For example, if the first digital image 112a was captured using a camera, the position of the camera while capturing the first digital image 112a may be stored together with the image data, and the position is used as the first viewpoint 100a.

When the (two-dimensional) directions of the rays 110a in the space of the first and second viewpoints 100a, 100b are known, their intersections 116 with the bisector plane 106 can be calculated to determine the projections 116 of the image 112a (or the positions 114a therein) onto the bisector plane 116. This is possible without knowledge about the three-dimensional positions of the objects 110 seen in the digital image 112a, or about their distance from the first viewpoint 100a, respectively.

Details of the relationship between the direction of the rays 110a and the image positions 114a in the first digital image 112a depend on the device used to generate the first digital image 112a, e.g. type of lens(es) and its (their) focal length(s), aperture, detector size and arrangement, and the resulting imaging properties. They may be described using a camera matrix. The directions of the rays 110a associated with certain positions 114a in the digital image 112a, or the camera matrix, respectively, are typically known, or can be determined, for example, when the digital image 112a was recorded with a pre-characterized camera installed in a fixed position, such as a rear-view camera of a vehicle or a surveillance camera installed in the ceiling of an operating theater. If the camera is portable and can be moved, it is equipped with a sensor, such as an inertial-measurement unit (IMU), to determine its movement relative to an initial position, at which it has been characterized. Alternatively, the directions of the rays 110a or the relative movement are determined from the digital image 112a itself using image analysis.

For a clear presentation, Fig. 1 depicts rays 110a as they occur, for example, in a pinhole camera model. However, this is not meant as a limitation to the described technique. A possibly complex relationship between the rays 110a and the image positions 114a can be accounted for using know techniques from ray optics, e.g. a description with an adequate camera matrix.

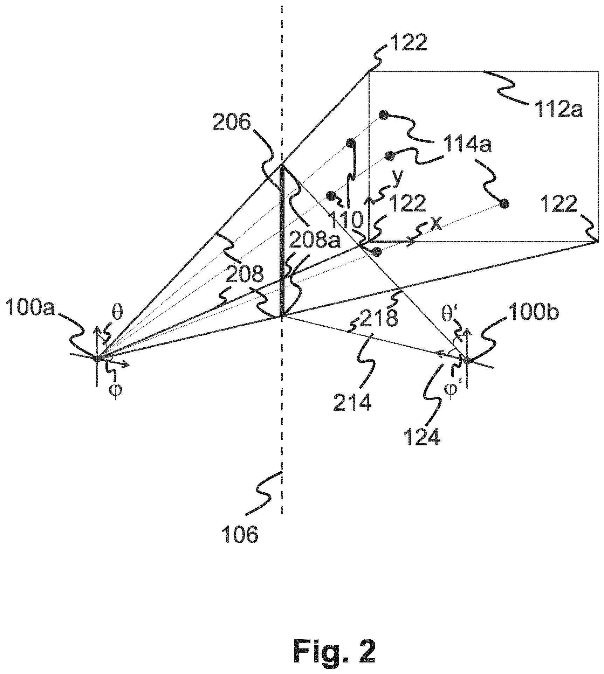

Fig. 2 is a schematic illustration of the method according to a second embodiment. This embodiment is similar to the one of Fig. 1. Same reference numerals refer to similar items. For the sake of brevity, the corresponding description will not be repeated.

In the embodiment of Fig. 2, reference points 122 are used to define a reference region of the first digital image 112a. More specifically, the reference points 122 define corners of the reference region. Alternative embodiments use a plurality of reference regions, and the reference points 122 define centers of the reference regions.

According to the depicted embodiment, the reference region is identical to the digital image 112a itself, but it may as well be a section of the digital image 112a.

The reference points 122, or corresponding rays 208, respectively, are projected onto the bisector plane 106, similar to the projection 116 of the image positions 114a described above.

For this purpose, first intersection points 208a between the bisector plane 106 and first rays 208 are calculated, wherein the first rays 208 run through the first viewpoint 100a and the reference points 122.

To compute the projection 116, the reference region of the digital image 112a (as defined by the reference points 122), is then projected onto a corresponding region 206 (projection region 206) of the bisector plane 106 as defined by the first intersection points 208a. In preferred embodiments, this is achieved using homography, which stretches or distorts the shape of the reference region to the shape of the projection region 206.

Consequently, the projection can be generated by projecting only few reference points 122 onto the bisector plane 106, instead of projecting the entire first digital image 112a, e.g. pixel by pixel.

The reference points 122 thus define third rays 218 through the first intersection points 208a and the second viewpoint 100b. In the perspective view 124 from the second viewpoint 100b, the virtual mirror image appears in a virtual mirror region 214 limited by the third rays 218. The reference points 122, or the reference region of the first digital image 112a, respectively, define the virtual mirror region 214.

Moreover, the reference points 122 are selected such that their coordinates within a coordinate system θ, ϕ associated with the first viewpoint 100a is known. In various embodiments, this is the case for the corners 122 of the digital image 112a, for example when the coordinate system θ, ϕ is a real-world coordinate system associated with a camera located at the first viewpoint 100a.

The corners 122 are defined by the (first) field of view of the first digital image 112a, or of a camera for capturing the first digital image 112a, respectively. More specifically, the corners 122 of the first digital image 112a correspond to the (negative and positive) horizontal and vertical opening angles of the first field of view. Consequently, the positions of corresponding corners as reference points 122 within the coordinate system x, y of the first digital image 112a, or the resulting first intersection points 208a and/or the resulting projection region 206, respectively provide a reference for the coordinate system θ, ϕ.

In some embodiments, the projection region 206 is subsequently imaged onto the perspective view 124 associated with the second viewpoint 100b. In other words, an image of the projection region 206 or of the projection 116 as seen from the second viewpoint 100b is generated. The image may be a digital/virtual image, or it may be displayed as a real-world image, e.g. on a screen at the second viewpoint 100b or located between the second viewpoint 100b and the bisector plane 106.

In some embodiments, the reference region of the digital image 112a is transformed directly into the virtual mirror region 214 for this purpose, without computing or storing a projection 116 of the digital image 112a onto the bisector plane 106. This approach may be particularly efficient if the projection 116 onto the bisector plane 106 itself is not requested by a user, but only the produced image with the virtual mirror image.

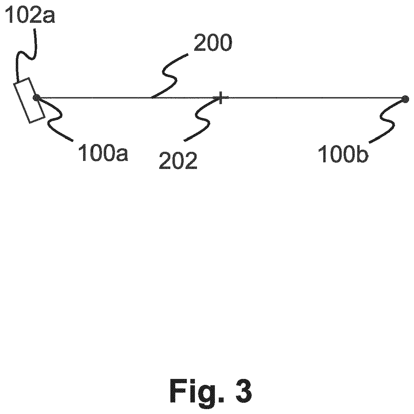

Fig. 3, Fig. 4, and Fig. 5 describe the method according to another embodiment, which is similar to the one of Fig. 2.

In Fig. 3, a midpoint 202 between the first viewpoint 100a and the second viewpoint 100b is determined.

A first imaging device 102a is located at the first viewpoint 100a, and an observer is located at the second viewpoint 100b. In alternative embodiments, a second imaging device is located at the second viewpoint 100b. The first imaging device 102a and the observer, or the second imaging device, respectively, are each equipped with a sensor for determining their absolute positions or their relative position. These sensors include Bluetooth transmitters and IMU units.

A computer system receives the positions of the viewpoints 100a, 100b or their relative position from the sensors and calculates the midpoint 202 as well as the direction 200 between the viewpoints 100a, 100b.

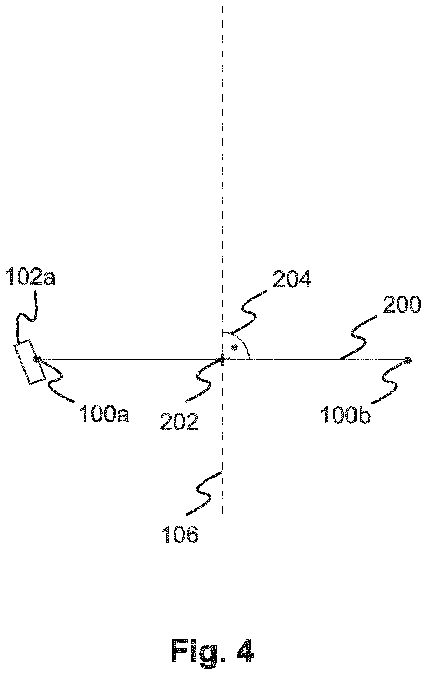

In Fig. 4, the bisector plane 106 is constructed.

The computer system constructs the bisector plane 106 perpendicular, i.e. at a 90° angle 204, to the direction 200 through the midpoint 202.

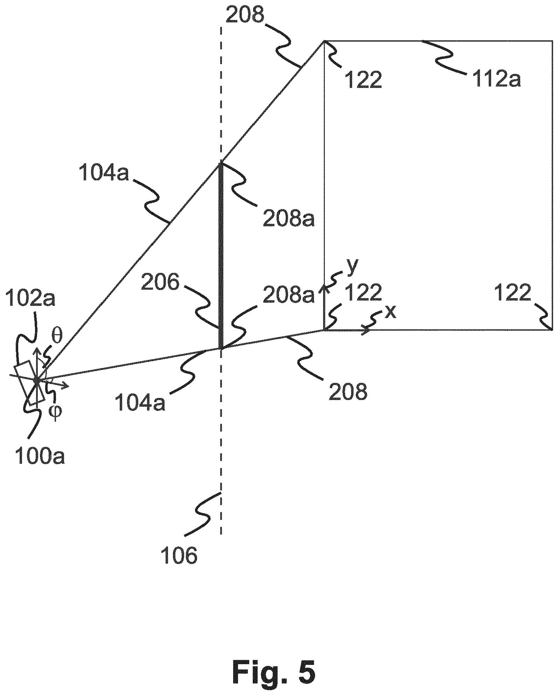

In Fig. 5, first intersection points 208a between the first rays 208 and the bisector plane 106 are determined.

In the depicted embodiment, the first rays 208 correspond to the field of view 104a (frustum 104a) of the first imaging device 102a. In other words, the first rays 208 limit the field of view 104a of the first imaging device 102a. Correspondingly, the reference points 122 correspond to the boundary, more specifically to corners, of the first digital image 112a.

The first imaging device 102a has been positioned and characterized to determine the directions of the first rays 208 in the real world. Its field of view 104a as well as the position 100a have been determined and stored in the camera or in the computer system. Subsequent changes in the pose of the first imaging device 102a can be determined using a sensor of the camera as described above, and/or from changes in the image from the first imaging device 102a as it moves.

With the information about the direction of the first rays 208, their first intersection points 208a with the bisector plane 106a are calculated by the computer system.

Optionally, the projection region 206 on the bisector plane 106 is determined according to corners defined by the first intersection points 208a.

In summary, these steps determine the projection region 206 which corresponds to the projection of the reference region of the first digital image 112a onto the bisector plane 106. In other words, the steps of Fig. 5 correlate the coordinate system x, y of the digital image to the coordinate system θ, ϕ associated with the first viewpoint 100a, or they determine the camera matrix of the imaging device 102a, respectively.

Subsequently, the first digital image 112a is transformed into the projection region 206 as described above in the context of Fig. 3, e.g. using homography, to generate the projection 116. This projection 116 reflects the virtual mirror image in the perspective view from the second viewpoint 100b, as laid out above.

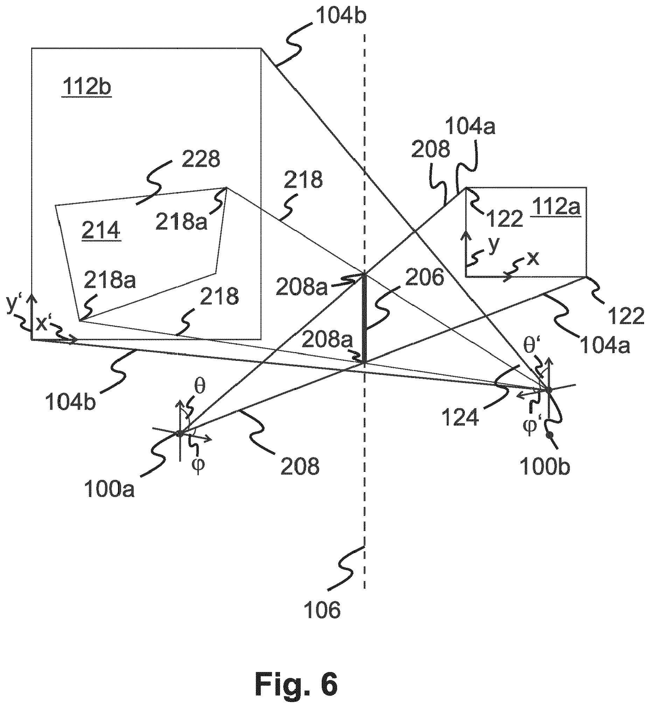

Fig. 6 illustrates the method according to another embodiment.

According to the embodiment of Fig. 6, a first digital image 112a with a first field of view 104a is associated with the first viewpoint 100a.

A second digital image 112b with a second field of view 104b is associated with the second viewpoint 100b.

According to this embodiment, a virtual mirror image of the first digital image 112a is merged into the second digital image 112b.

As described in the context of embodiment of Fig. 1 and Fig. 2, the projection 116 (obtained, e.g., as described in the context of Fig. 1, Fig. 2, Fig. 3, Fig. 4, Fig. 5) may be imaged into the second digital image 112b for this purpose.

However, the embodiment of Fig. 6 provides an alternative approach, wherein the first digital image 112a (or a reference region thereof) is imaged directly into the second digital image 112b, without a need to determine its projection 116 onto the bisector plane 106. This approach may hence be computationally efficient. Nevertheless, the projection 116 of the first digital image 112a (or a reference region thereof) onto the bisector plane 106 may be calculated in addition, e.g. if requested by a user, as described in the context of Fig. 2.

In the method according to the embodiment of Fig. 6, the computer system calculates the bisector plane 106, for example as described in the context of Fig. 3 and Fig. 4.

First rays 208 are constructed according to reference points 122 of a reference region of the first digital image 112a. The first rays 208 are constructed through the first viewpoint 100a.

According to the depicted embodiment, the reference region is identical to the first digital image 112a, the reference points 122 are corners of the first digital image 112a, and the first rays 208 correspond to the first field of view (frustrum) 104a of the first digital image 112a, or of an imaging device 102a for capturing the first digital image 112a, respectively. For the sake of clarity, only the reference points 122 and first rays 208 associated with two corners are indicated in the figure, but four corners or a polygon with three or more corners are typically used. In alternative embodiments, different reference points are chosen. For example, the reference region may be a section of the first digital image 112a defined by reference points such as characteristic markers in the image with a known (real-world) distance.

The computer system calculates the first intersection points 208a of the first rays 208 and the bisector plane 106, e.g. as described above in the context of Fig. 2 or Fig. 5.

The computer system then projects the first intersection points 208a into the perspective view 124 associated with the second viewpoint 100b to obtain projected reference points 218a.

According to the depicted embodiments, third rays 218 through the second viewpoint 100b and the first intersection points 208a are constructed for this purpose.

The projected reference points 218a are obtained as intersection points between the third rays 218 and the plane of the second digital image 112b.

In the construction of the rays 218, the second field of view 104b is used as a reference frame.

In other words, the first intersection points 208a are transformed into the coordinate system x', y' of the second digital image.

This coordinate system x', y' is related to the coordinate system θ', ϕ' associated with the second viewpoint 100b via a camera matrix of a second image device for obtaining the second digital image 112b, as similarly described above in the context of Fig. 2 for the camera matrix of the first imaging device 102a. The viewpoints 100a, 100b and the fields of view 104a, 104b relate this coordinate system θ', ϕ' to the coordinate system θ, ϕ associated with the first viewpoint 100a. The coordinate system θ, ϕ associated with the first viewpoint 100a is related to the coordinate system x, y of the first digital image 112a via a camera matrix of the first imaging device 102a for obtaining the first digital image 112b.

The method associates the coordinate system θ, ϕ with the coordinate system θ', ϕ' using the viewpoints 100a, 100b and the fields of view 104a, 104b. The method further determines the camera matrixes of the respective first imaging device 102a and second imaging device by associating the respective viewpoint 100a, 100b and the respective field of view 104a, 104b with the corners of the respective digital image 112a, 112b. In alternative embodiments (not shown), at least a part of a camera matrix (e.g., based on opening angles of the fields of view 104a, 104b) is provided to the computer system (e.g., provided by the first imaging device 102a or second imaging device).

The projected reference points 218a define a virtual mirror region 214 in the plane of the second digital image 112b. Depending on the viewpoints 100a, 100b and the fields of view 104a, 104b, the virtual mirror region 214 is located inside or at least partially outside of the second field of view 104b.

To compute a mirror-transformed image of the first digital image 112a with respect to the bisector plane 106 (the virtual mirror image according to the perspective view 124, respectively), the reference region of the first digital image 112a is then fitted into the virtual mirror region 214 of the second digital image 112b, as similarly described above for fitting the reference region of the first digital image 112a into the projection region 206 of the bisector plane 106.

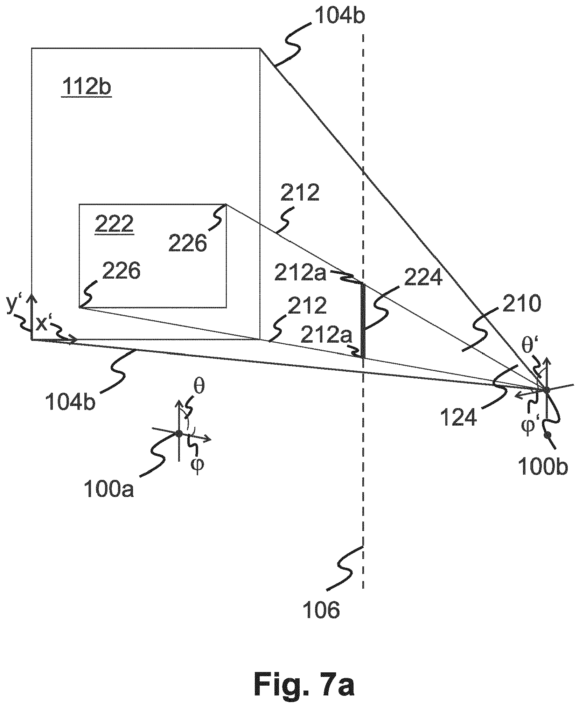

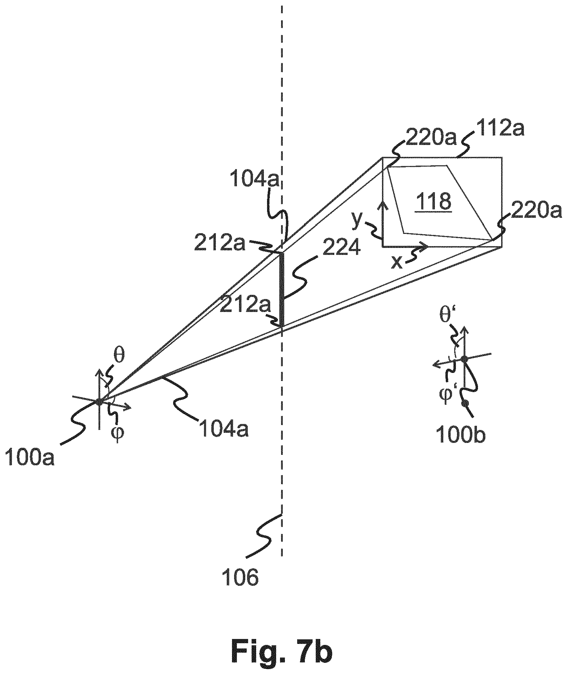

Fig. 7a, Fig. 7b illustrate process steps to determine the reference points 122 or the reference region of the first digital image 112a. According to embodiments, these process steps are introduced into the method according to the embodiments of Fig. 2, Fig. 5 or Fig 6.

In this embodiment, a user selects a predefined projection region 210 as illustrated in Fig. 7a. The user has the option to select the predefined projection region 210 with respect to the perspective view 124 (i.e. in the coordinate system θ', ϕ'), for example as a boundary 212 of the predefined projection region 210, or with respect to the second digital image 112b in embodiments with such a second digital image 112b. In such embodiments, the user has the option to select the predefined projection region 210 as a predefined mirror section 222 within the second digital image 112b, e.g. by selecting second reference points 226 within the second digital image 112b, for example corners 226 to define the predefined mirror section 222.

The computer system projects the predefined projection region 210 onto the bisector plane 106 to determine a second projection region 224 thereon. The projection is performed according to the projection of the reference region of the first digital image 112a onto the bisector plane 106 as described above in the context of Fig. 2, Fig. 5 or Fig 6.

Therefore, the computer system constructs second rays 212 corresponding to the boundary of the predefined projection region 210, i.e., in embodiments with the second digital image 112b, to the second reference points 226. The construction of the second rays 212 can be performed according to the construction of the first rays 208 as described above in the context of Fig. 2, Fig. 5 or Fig 6. The computer system calculates third intersection points 212a of the second rays 212 and the bisector plane 106. The calculation of the third intersection points 212a can be performed according to the calculation of the first intersection points 208a as described above in the context of Fig. 2, Fig. 5 or Fig 6.

In embodiments with the second digital image 112b, the second reference points 226 can be projected onto the bisector plane 106 for this purpose. The projection may be performed according to the projection of the reference points 122 onto the bisector plane 106 as described above in the context of Fig. 2, Fig. 5 or Fig 6.

In Fig. 7b, the third intersection points 212a, or the second projection region 224, are/is projected onto the first digital image 112a, i.e. into the coordinate system x, y of the first digital image 112a and/or onto the plane of the first digital image 112a.

The projection of the third intersection points 212a onto the first digital image 112a can be performed according to the projection of the first intersection points 208a onto the second digital image as described in the context of Fig. 6, resulting in the fourth intersection points 220a. The projection of the second projection region 224 onto the first digital image 112a can be performed according to the projection of the projection region 206 onto the second digital image 112b as described in the context of Fig. 6.

The fourth intersection points 220a are to define the reference points 122. A region of interest 118 and the first digital image 112a is defined by the fourth intersection points 220a, e.g. as corners thereof. In other words, the projection of the second projection region 224 onto the first digital image 112a defines the region of interest 118 in the first digital image 112a.

The region of interest 118 is used as the reference region in a modification of the method, e.g. in the embodiments of Fig. 3, Fig. 5 or Fig 6.

Consequently, the virtual mirror image takes up the user-selected section in the perspective view 124 or in the second digital image 112b, even when a viewpoint 100a, 100b moves. This prevents the virtual mirror image from undesirable moving in the perspective view 124 or in the second digital image 112b, possible obstructing objects therein which are of interest to an observer.

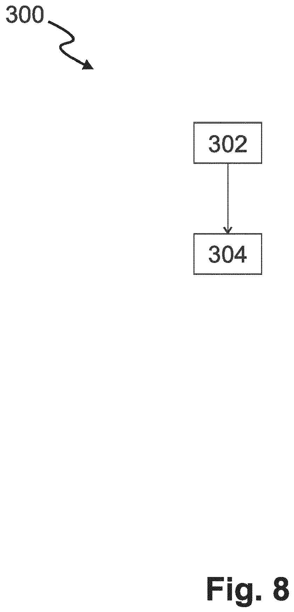

Fig. 8 summarizes the method 300.

At step 302, the method comprises determining a bisector plane 106 of the first viewpoint 100a and the second viewpoint 100b.

A first digital image 112a is associated with the first viewpoint 100a.

This process step may be performed as described in the context of Fig. 1, Fig. 3, or Fig. 4.

At step 304, the method comprises computing, based on a projection 116 of the first digital image 112a onto the bisector plane 106, a virtual mirror image.

The virtual mirror image is a virtual mirror image according to a perspective view associated with a second viewpoint 100b.

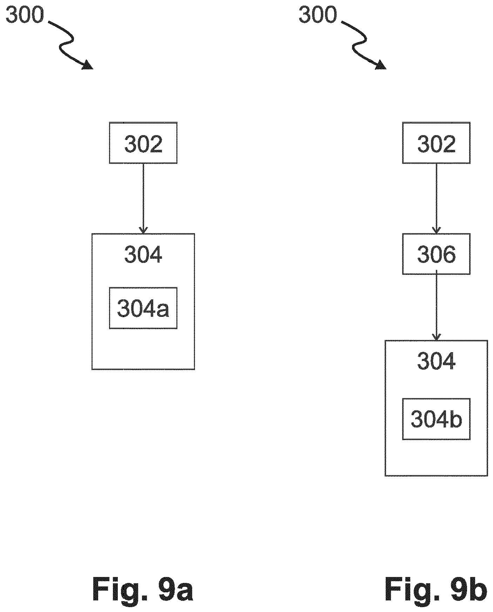

Fig. 9a and Fig. 9b illustrate alternative embodiments of the method.

According to the embodiment of Fig. 9a, at process step 304 the projection 116 is computed 304a as the virtual mirror image.

This process step may be performed as described in the context of Fig. 1, Fig. 2, or Fig. 5.

According to the embodiment of Fig. 9b, the method 300 comprises imaging 306 the projection 116 into the perspective view 124 associated with the second viewpoint 100b to obtain a mirror-transformed image 228.

This process step may be performed as described in the context of Fig. 6. Alternatively, the projection 116 of Fig. 1, Fig. 3, or Fig. 4 is imaged into the perspective view 124 associated with the second viewpoint 100b to obtain the mirror-transformed image 228.

In this embodiment, the mirror-transformed image 228 is computed as the virtual mirror image.

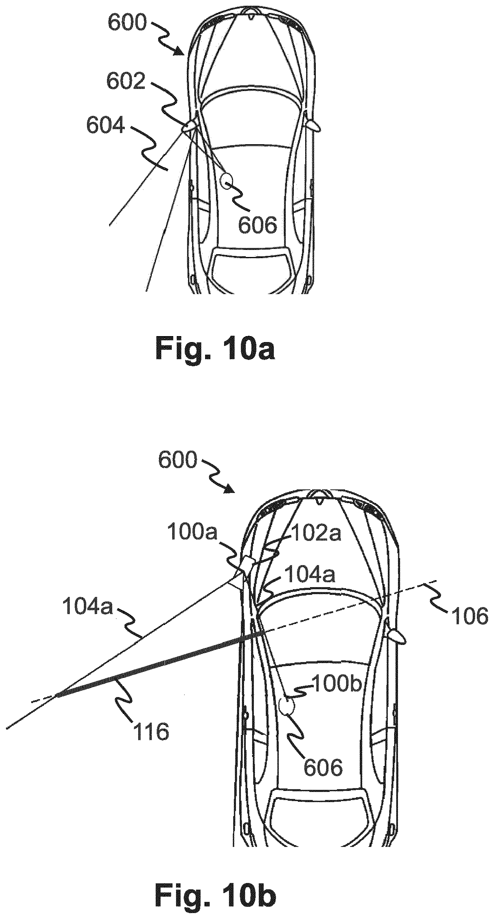

Fig. 10a and Fig. 10b illustrate another embodiment of the method, according to the use case of a rear-view camera of a car 600 to generate the virtual mirror image.

A conventional rear-view car mirror 602, see Fig. 10a, is a reflective optical device, that provides a driver 606 with a rear view 604 according to a reflection of objects therein. Its field of view is rather limited when a flat mirror 602 is used. To compensate for this problem, the mirror 602 may be curved to enlarge the field of view 604 of the driver 606 in the mirror 602 with respect to the one of a flat mirror 602. However, as the mirror 602 is mounted to the outside of the car, its possible size is limited. Consequently, the field of view 604, or the curvature of the mirror 602, may not be enlarged too much, since otherwise objects in the mirror would appear too small to the driver 606 to allow for a safe and useful judgement of the situation that the car is in. As the curvature of the mirror 602 is constant and cannot be modified by the driver 606, the field of view 604, or the curvature of the mirror 602, respectively, is limited by situations wherein the driver requires a large image, such as a situation on a highway with a large distance between the car 600 and objects viewed in the mirror 602.

Fig. 10b depicts the car 600 with the virtual mirror image according to the current description.

As the first imaging device 102a, a camera 102a is installed on the car 600 at a position similar to the one of a conventional rear-view car mirror 602, thus defining the first viewpoint 102a.

The second viewpoint 100b is the one of the driver 606 as the observer.

A computer system determines the bisector plane 106 and the projection 116 of a first digital image 112a from the camera 102a thereon, as described above in the context of Fig. 1, Fig. 2, Fig. 5, and Fig. 9a.

In some embodiments, the computer system is integrated into the camera 102a. In alternative embodiments, an onboard computer system of the car 600 is used. In yet another embodiment, a display is provided to display the projection 116 to the driver 606, and the computer system is integrated into the display.

The projection 116 is displayed to the driver 606, in some embodiments as a projection by a head-up display on a side window of the car 600, in others, by a display such as an LED display arranged inside the car between the camera 102a and the driver 606.

The method and system established this way permits a wide and adjustable field of view for the driver 606 into a region to the left and behind the car 600. As the display providing the view (projection 116) to the driver 606 is arranged inside the car, i.e. the display and the camera 102a are separated, the image can be larger and the field of view can be made larger than in case of a conventional mirror 602. Moreover, the display can be a touchscreen display, and the driver 606 can flexibly enlarge the view or select a specific region of interest, for example when parking the car 600.

In the method according to Fig. 10b, the viewpoint 100a of the camera 102a is fixed. The fixed position of the camera 102a improves the accuracy in determining the bisector plane 106, and consequently of the projection 116 and of the virtual mirror image.

The viewpoint 100b of the driver 606 moves only within a narrow range defined by the inside dimensions of the car 600.

In some embodiments, a fixed viewpoint 100b of the driver 600 is stored on the computer system and assumed in the method (i.e., for the projection). The stored fixed viewpoint 100b is selected according to a reference position of the driver 606, e.g. when starting the car 600 or when the driver 606 makes a corresponding selection on the board computer of the car 600.

The stored fixed viewpoint 100b makes the method more efficient and avoids errors related to the determining of the viewpoint 100b. Moreover, corresponding embodiments can ensure that the display always shows a rear view, even if the position of the driver 606 should change unexpectedly, such as when the driver 606 grabs an item from the glove box or from the floor of the car 600.

In alternative embodiments, the viewpoint 100b used in the method is constrained to deviate from the stored/fixed position by at most a predefined amount, such as 40 cm. Within this range, deviations of the drivers 606 position from the stored/fixed a position are determined based on an image from a camera, which tracks the eyeballs of the driver 606 to determine the viewpoint 100b. If the eyeball tracking fails to detect the position of the driver 606, the stored/fixed position is used in the method.

In alternative embodiments (not depicted) of the method according to Fig. 10b, a mobile camera 102a is used, which is not fixed to a car. For example, a camera 102a of a mobile phone is used. The mobile phone also provides a display for displaying the projection 116. Instead of the driver 606, a viewpoint 100b of an arbitrary user in front of the camera is determined, e.g. by eyeball tracking. However, corresponding embodiments do not provide the fixed position 100a of the camera 102a on the car 600, and the movement of the viewpoint 102b of the user is not constrained as in the example of Fig. 10b by the chassis of the car 600. The accuracy of the virtual mirror image in the depicted embodiment of Fig. 10b is therefore better than in the embodiment with the mobile camera.

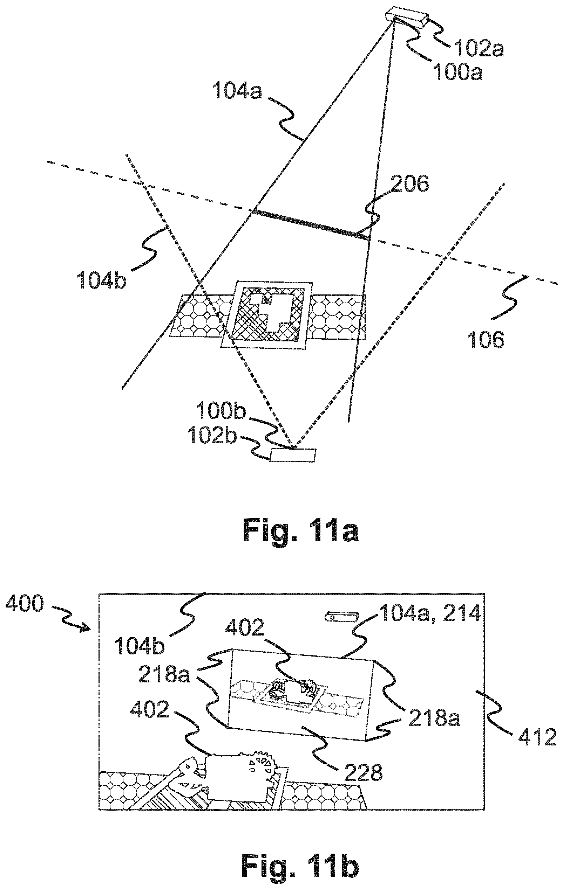

Fig. 11a and Fig. 11b illustrate another embodiment of the method, with two cameras 102a, 102b at viewpoints 100a, 100b for obtaining the digital images 112a, 112b.

The cameras 102a, 102b view a scene with objects such as a table and a board thereon, as illustrated in Fig. 11a.

A computer system determines the bisector plane 106 of the viewpoints 100a, 100b and the virtual mirror region 214 in the plane of the second digital image 112b. The computer system fits the digital image 112a from the first camera 102a into the virtual mirror region 214 of the second digital image 112b to generate a mirror-transformed image 228 as the virtual mirror image. These process steps are performed as described in the context of Fig. 6 and Fig. 9b. In this embodiment, the mirror-transformed image 228 serves as the virtual mirror image and is identical thereto.

The computer system further overlays the mirror-transformed image 228 into the second digital image 112b to generate a combined image 400. Only a section 412 of the digital image 112b from the second camera 102b remains thus visible in the combined image 400, whereas the virtual mirror region 214 is overlaid by the mirror-transformed image 228, or by the virtual mirror image, respectively.

The combined image 400 may also be referred to as an augmented reality image, as therein the second digital image 112b is augmented with the virtual mirror image based on the first digital image 112a.

The computer system may be comprised in one of the cameras 102a, 102b or an external computer system may be used.

The computer system also merges an image of a three-dimensional computer-animated object 402 into the combined image 400. More specifically, a first image of the three-dimensional computer-animated object 402 is inserted into mirror-transformed image 228 and a second image of the three-dimensional computer-animated object 402 is inserted into the second digital image 112b prior to merging them into the combined image 400.

The computer-animated object 402 is positioned with a known position and pose with respect to the viewpoints 100a, 100b and the fields of view 104a, 104b. Three-dimensional knowledge, or a three-dimensional reconstruction respectively, of the depicted scene is not required. As the viewpoints 100a, 100b and the fields of view 104a, 104b are known for both digital images 112a, 112b the computer-animated object 402 is accurately imaged in both images 112a, 112b according to their respective perspectives.

In this embodiment, the positions 100a, 100b of the cameras 102a, 102b may be fixed, or the cameras 102a, 102b maybe moveable with sensors to determine their positions 100a, 100b or their relative position, respectively. The fixed arrangement is preferable for a high accuracy of the determined bisector plane 106 and of the mirror-transformed image 228 or of the virtual mirror image, respectively.

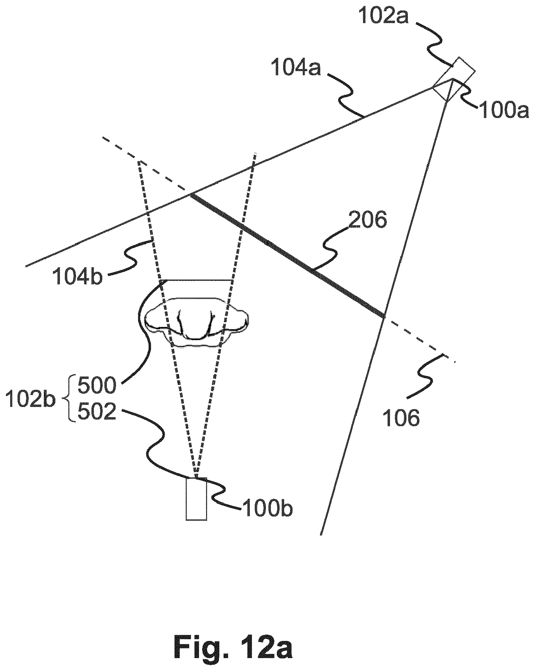

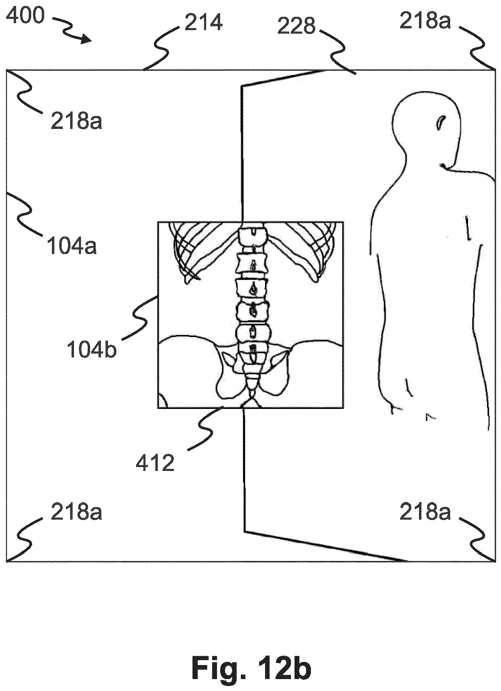

Fig. 12a and Fig. 12b illustrate another embodiment of the method, which is similar to the one of Fig. 11a, Fig. 11b. For the sake of brevity, a description of similar process steps is omitted here, and only major differences will be described.

The first imaging device 102a of the method of Fig. 12a, Fig. 12b is a camera as in Fig. 11a, Fig. 11b. The second imaging device 102b of the method of Fig. 12a, Fig. 12b, however, is an x-ray imaging device 500, 502.

In contrast to a camera, which detects visible, near infrared and/or near ultraviolet light which is typically abundantly available in the environment, the x-ray imaging device 102b, 500, 502 relies on a source 502 to provide a sufficient intensity of x-rays to be imaged by a detector 500. Hence, the field of view 104b of the x-ray imaging device 102b is defined by both the source 502 and the detector 500, as illustrated in Fig. 12a.

In the depicted embodiment, the source 502 emits x-rays into a volume larger than the detector 500. Hence, it is the size of the detector 500 and its distance from the source 502 which define the field of view 104b. If the source 502 would emit x-rays into a volume smaller than the detector 500, it would be the source 502 that would determine the field of view 104b. In general, the overlap of source 502 and detector 500 determines the field of view 104b.

Another difference between the camera 102a and the x-ray imaging device 102b, 500, 502 is that the camera 102a records light reflected or scattered from the surface of objects, whereas the x-ray imaging device 102b, 500, 502 records light transmitted through the object. This becomes relevant if the x-ray beam from the source 502 is parallel, or if the boundaries of the corresponding field of view 104a, 104b are parallel, respectively. In corresponding embodiments, source 502 and detector 500 may be exchanged in the construction of the bisector plane 106 and the subsequent computing of the virtual mirror image. In particular, the source 502 or the detector 500 may selectively be used to define the second viewpoint 102b.

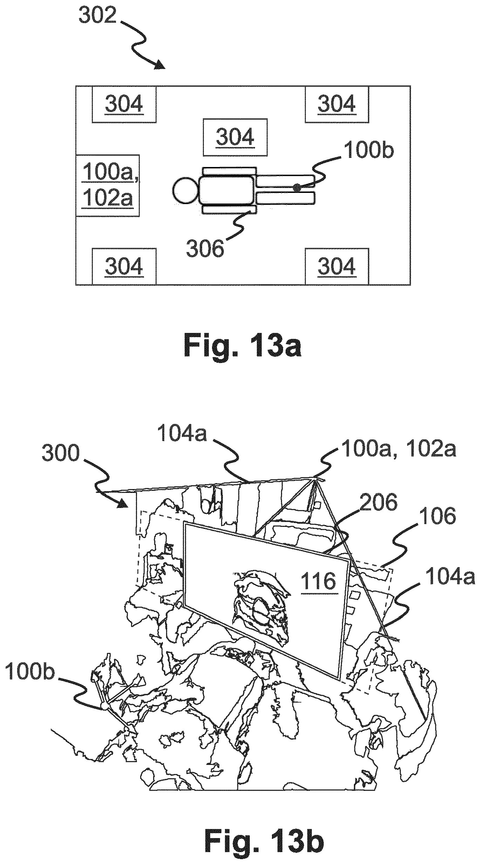

Fig. 13a, Fig. 13b illustrate an alternative embodiment of the method, according to a use case with a camera 102a mounted in an operating theater 302 with a patient 306. The embodiment is similar to the ones described in the context of Fig. 1, Fig. 2, Fig. 5, Fig. 9a, and Fig. 10b. The following description restricts itself to the most important modifications.

The camera 102a has a field of view 104a, and its position defines the first viewpoint 100a.

In the embodiment of Fig. 13a, Fig. 13b several acquisition cameras 304 are distributed over the operating theater 302 with the patient 306, as illustrated in Fig. 13a. The acquisition cameras 304 are attached to the walls and the ceiling of the operating theater 302 at fixed and calibrated positions. The position of the camera 102a with respect to the acquisition cameras 304 is also fixed and calibrated.

As illustrated in Fig. 13b, a three-dimensional virtual scene 300 of the operating theater 302 is constructed based on the images from the acquisition cameras 304.

As the position of the camera 102a with respect to the acquisition cameras 304 is calibrated, its position within the three-dimensional virtual scene 300 is also calibrated and known.

The second viewpoint 102b as well as a corresponding field of view 104b can be chosen freely within or with respect to the three-dimensional virtual scene 300.

A computer system determines the bisector plane 106 within the three-dimensional virtual scene 300. The computer system further computes the projection 116 of a first digital image 112a from the camera 102a onto the bisector plane 106, as described above in the context of Fig. 1, Fig. 2, Fig. 5, Fig. 9a, and Fig. 10b.

The projection 116 is then inserted into the three-dimensional virtual scene 300.

Noteworthy, whereas the three-dimensional virtual scene 300 is constructed based on the images from the acquisition cameras 304, and may suffer from the typical artifacts resulting from the reconstruction of a three-dimensional virtual scene 300, the projection 116 is solely a projection of the two-dimensional digital image from the camera 102a onto the bisector plane 106. Hence, the image quality of the projection 116 is similar to the image quality of the digital image 112a from the camera 102a, without any artifact related to a three-dimensional reconstruction.

The projection 116 provides a virtual mirror image to an observer at the second viewpoint 102b in the three-dimensional virtual scene 300. In other words, in an image of the three-dimensional virtual scene 300 from the second viewpoint 100b, the inserted projection 116 appears as a mirror, or implements a mirror based on the first digital image 112a, respectively. This virtual mirror image is typically provided overlaid with a second digital image 112b as seen from the second viewpoint 102b according to the second field of view 104b. In other words, the second digital image 112b is derived from the three-dimensional virtual scene 300 according to the second viewpoint 102b and according to the second field of view 104b.

In corresponding embodiments, for deriving the second digital image 112b the three-dimensional virtual scene 300 is selectively rotated or scaled according to a user selection. For example, if the user is interested in a specific region of the three-dimensional virtual scene 300, the second field of view 104b is set according to this specific region, and the three-dimensional virtual scene 300 is magnified prior to deriving the second digital image 112b.

In this embodiment as well, the bisector plane 106 may be fixed as described above.

In particular, this may be achieved (in part) by rotating the three-dimensional virtual scene 300 prior to deriving the second digital image 112b, such that the observer always views the scene from the same direction.

Alternatively, or in addition, the three-dimensional virtual scene 300 is scaled prior to deriving the second digital image 112b, such that the observer always views the scene from the same distance.

The user can selectively activate or deactivate the corresponding rotation and/or scaling.

This provides the user, i.e. a surgeon performing tele-surgery, with a flexible and intuitive representation of the operation theater 302.

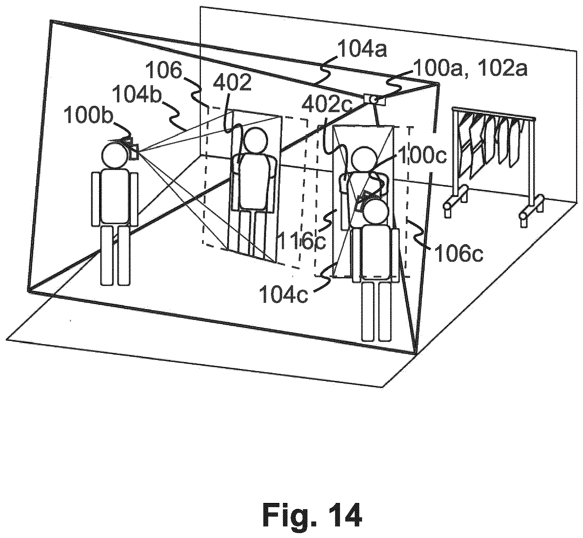

Fig. 14 illustrates the method according to yet another embodiment. The embodiment is similar to the ones described in the context of Fig. 1, Fig. 2, Fig. 5, Fig. 9a, and Fig. 10b. The following description restricts itself to the most important modifications.

In the embodiment of Fig. 14, a first camera 102a with a first viewpoint 100a and a first field of view 104a is provided.

In addition to the second viewpoint 100b defined by a position of a user (more specifically, of his virtual reality glasses, which may comprise or act as a second imaging device 102b for capturing a second digital image for merging with the virtual mirror image), an additional second viewpoint 100c is defined by a position of an additional user (more specifically, of his virtual reality glasses, which may comprise or act as an additional second imaging device 102b for capturing an additional second digital image for merging with the additional virtual mirror image).

For each second viewpoint 100b, 100c a bisector plane 106, 106c is calculated, i.e. an additional bisector plane 106c is calculated between the first viewpoint 100a and the additional second viewpoint 100c, according to the additional field of view 104c. A computer system determines the projection 116c of a first digital image 112a from the camera 102a onto the additional bisector plane 106c, in addition to determining the projection 116 of the first digital image 112a onto the bisector plane 106. The projection 116, 116c is obtained as described above in the context of Fig. 1, Fig. 2, Fig. 5, and Fig. 9a.

In the depicted embodiment, a computer-animated object 402 in the form of a shirt is inserted into the projection 116.

An additional computer-animated object 402c in the form of another shirt is inserted into the additional projection 116c.

An image of the projection 116 is provided to the user at the position 100b via his virtual reality glasses as a virtual mirror image showing himself and the shirt.

An image of the additional projection 116c is provided to the user at the position 100c via his virtual reality glasses as a virtual mirror image showing himself and the shirt.

This way, the method according to the embodiment of Fig. 14 implements a virtual fitting room, which can supply a plurality of users synchronously with a view of the products they are interested in. The user is relieved from the burden of actually having to put on the shirts. This does not only save the users' time, but also increases the throughput of users as compared to a physical changing room. The support for several concurrent users increases the throughput further. Consequently, the method may save customers from having to wait in line at a physical changing room.

### LIST OF REFERENCE SIGNS

- 100a, 100b: first, second viewpoint
- 102a, 102b: first, second imaging device
- 104a, 104b: first, second field of view
- 106: bisector plane
- 108: bisector section
- 110: object
- 110a, 110b: ray to first, second imaging device
- 112a, 112b: first, second image
- 114a: position of object in first image
- 116: projection
- 114b: projected position of object in second image
- 118: region of interest
- 120a, 120b: plane of the first, second image
- 122: reference points; corners of at least section of first digital image
- 124: perspective view from the second viewpoint

- 200: direction between first and second imaging device
- 202: midpoint
- 204: 90° angle
- 206: projection region
- 208: first rays
- 208a: first intersection points (of the first rays and the bisector plane)
- 210: predefined projection section
- 212: second rays
- 212a: third intersection points (of the second rays and the bisector plane)
- 214: virtual mirror region
- 218: third ray
- 218a: second intersection points
- 220a: fourth intersection points
- 222: predefined mirror section
- 224: second projection region
- 226: second reference points
- 228: mirror-transformed image

- 300: three-dimensional virtual scene
- 302: operation room
- 304: acquisition cameras
- 306: patient

- 400: combined image
- 402: computer-animated object
- 412: portion of the second digital image

- 500: x-ray detector
- 502: x-ray source

- 600: car
- 602: side mirror
- 604: field of view of driver in side mirror
- 606: driver

- 300: three-dimensional virtual scene
- 100c: additional second viewpoint
- 104c: additional second field of view
- 106c: additional bisector plane
- 116c: additional projection
- 402c: additional computer-animated object

## Claims

1. A computer-implemented method for generating, based on a first digital image (112a) associated with a first viewpoint (100a), a virtual mirror image (412a) according to a perspective view associated with a second viewpoint (100b); wherein the method comprises:
determining a bisector plane (106) of the first viewpoint (100a) and the second viewpoint (100b); and
computing the virtual mirror image based on a projection (116) of the first digital image (112a) onto the bisector plane (106).

2. The method according to claim 1, wherein the projection (116) is computed as the virtual mirror image.

3. The method according to any of the previous claims, wherein the computing the virtual mirror image comprises:
computing a first intersection point (208a) between a first ray (208) and the bisector plane (106), wherein the first ray (208) is associated with a reference point (122) of the first digital image (112a).

4. The method according to claim 3,
wherein the computing the first intersection point (208a) comprises referencing a direction of the first ray (208) to a first field of view (104a) associated with the first digital image (112a) or to a first viewing direction associated with the first digital image (112a).

5. The method of any of the preceding claims, which further comprises:
projecting, according to a mirroring about the bisector plane (106), a shape of a reference region of the first digital image (112a) into the perspective view (124) associated with the second viewpoint (100b) to obtain a virtual mirror region (214); and
transforming the reference region of the first digital image (112a) to the virtual mirror region (214).

6. The method according to any of the preceding claims, which further comprises merging the virtual mirror image (412a, 228) and at least a portion (412b) of a second digital image (112b) to generate a combined image (400), wherein the second digital image (112b) is associated with the second viewpoint (100b).

7. The method according to any of the previous claims, which further comprises: re-determining, upon a change of the first viewpoint (100a) and/or the second viewpoint (100b) to a new position, the bisector plane (106) of the first viewpoint (100a) and the second viewpoint (100b) according to the new position(s).

8. The method according to any of the preceding claims, which further comprises:
after determining the bisector plane (106) of the first viewpoint (100a) and the second viewpoint (100b), storing the bisector plane (106) to obtain a fixed bisector plane (106) and/or storing the second viewpoint (100b) to obtain a fixed reference second viewpoint (100b); and, upon a change of the second viewpoint (100b) to a new position thereof:
computing a subsequent virtual mirror image based on a projection (116) of a subsequent first digital image (112a) onto the fixed bisector plane (106), such that the subsequent virtual mirror image is a mirror image of the subsequent first digital image (112a) according to a perspective view (124) associated with the fixed reference second viewpoint (100b).

9. The method according to any of the previous claims, wherein the determining the bisector plane (106) comprises:
determining a midpoint (202) between the first viewpoint (100a) and the second viewpoint (100b);
determining a first direction (200) from the second viewpoint (100b) to the first viewpoint (100a); and
determining the bisector plane (106) perpendicular to the first direction (200) and through the midpoint (202).

10. The method according to claim 5, optionally in combination with any of the preceding claims, which further comprises:
defining a predefined projection section (210) within the perspective view associated with the second viewpoint (100b) or a predefined mirror section (222) within a second digital image (112b) associated with the second viewpoint (100a); and
transforming, according to a mirroring about the bisector plane (106), the predefined projection section (210) or the predefined mirror section (222) onto the first digital image (112a) to define a region of interest (118);
wherein the reference region of the first digital image (112a) is defined by the region of interest (118).

11. The method according to any of the preceding claims, wherein the perspective view (124) associated with the second viewpoint (100b) is associated with a three-dimensional virtual scene (300); and wherein the method further comprises:
inserting the projection (116) or the virtual mirror image into the three-dimensional virtual scene (300).

12. The method according to claim 11, which further comprises rotating and/or scaling the virtual mirror image and/or the three-dimensional virtual scene.

13. A computer program adapted to instruct a computer system to execute the method according to any of the preceding claims.

14. A computer system for generating, based on a first digital image (112a) associated with a first viewpoint (100a), a virtual mirror image (412a) according to a perspective view (124) associated with a second viewpoint (100b), wherein the computer system comprises at least one processor and at least one memory and is adapted to:
receive the first digital image (112a);
receive the second viewpoint (100b);
determine a bisector plane (106) of the first viewpoint (100a) and the second viewpoint (100b); and
compute the virtual mirror image based on a projection (116) of the first digital image (112a) on the bisector plane (106).

15. An imaging system comprising the computer system according to claim 14, wherein the imaging system further comprises:
a first imaging device (102a) adapted to acquire the first digital image (112a) and to send it to the computer system, wherein the first imaging device (102a) is a camera or an x-ray imaging device.
